# EUROPEAN PATENT APPLICATION

(11) **EP 3 235 957 A1**
(43) Date of publication of application: **25.10.2017**
(21) Application number: 15850563.6
(22) Date of filing: 11.05.2015
(51) Int. Cl.: E02F 3/38, E02F 3/42

(54) **EXCAVATOR ARM HAVING ROTATION DEVICE**

(30) Priority: 13.10.2014 KR 20140137880
(71) Applicant: Kyungwontech Co., Ltd, Eumseong-gun Chungbuk 27649 (KR)
(72) Inventor: JUNG, Kyungrae, Eumseong-gun, Chungcheongbuk-do 369-832 (KR)
(74) Representative: Thibon, Laurent
(86) International application number: PCT/KR2015/004703
(87) International publication number: WO 2016/060348

(57) **Abstract**

The present invention relates to an excavator arm having a rotation device. The excavator arm is connected to a boom of an excavator to be operated by a cylinder, connected with a bucket for excavation at the lower end through a quick coupler, and connected with a bucket cylinder for operating the bucket over the arm. The arm is divided into an upper arm and a lower arm and a rotation device that selectively rotates the lower arm at predetermined angles over 360° in both directions is fixed between the upper arm and the lower arm.

## Description

### Technical Field

The present invention relates to an excavator arm having a rotation device. More particularly, the present invention relates to an excavator arm having a rotation device, whereby the excavator arm is able to easily change an excavation direction not only into a forward excavation direction and a backward excavation direction, but also into excavation directions at predetermined angles from the forward and backward excavation directions even without separating and remounting a bucket because the rotation device is fixed between an upper arm and a lower arm and can rotate and fix a lower arm at 360° or more in both directions, and to remarkably improve efficiency of excavation, minimize fatigue of a worker, and improve work efficiency because there is no need to separate and remount a bucket.

### Background Art

In general, an excavator, which is construction equipment, includes a body mounted on a vehicle, a boom connected to the top of the body to be operated by a boom cylinder, an arm connected to the boom to be operated by an arm cylinder, and a bucket connected to an end of the arm to be operated by a bucket cylinder.

In an excavator having this configuration, the boom is moved up and down through a boom joint that is rotated by the boom cylinder and the arm makes crowding and dumping motions by being pulled forward and pushed backward by an arm joint that is rotated by the arm cylinder.

However, in an excavator having the configuration of the related art, the arm can be actuated forward and backward by the boom cylinder, but cannot rotate. Accordingly, in order to turn the bucket that has been operated in a forward excavation direction, in which the bucket excavates toward the excavator, into a backward excavation direction, in which the bucket excavates away from the excavator, it is required to stop excavation and then turn and mount the bucket at 180° into the backward excavation direction. Further, it is required to separate and remount the bucket in order to change the excavation direction, which makes the excavation inconvenient.

In other words, existing excavator arms cannot change the excavation direction of a bucket, so it is required separate and remount a bucket. Accordingly, it takes time to separate and remount a bucket in order to change the excavation direction of a bucket, which deteriorates efficiency of the excavation.

As described above, it is impossible to change the excavation direction of a bucket without separating and remounting the bucket once mounting the bucket on existing excavator arm. Further, since the excavation direction of a bucket is limited to the forward excavation direction and the backward excavation direction, it is required to turn the cab of an excavator or move the excavator, for example, in order to excavate in an arc shape. Accordingly, excavation work takes long time and efficiency of excavation is considerably deteriorated.

Accordingly, it is required to study and develop an excavator arm that can easily selectively change an excavation direction of a bucket not only into a forward excavation direction and a backward excavation direction, but into excavation angles at predetermined angles even without separating and remounting the bucket, thereby remarkably improving efficiency of excavation and work efficiency of a worker by minimizing fatigue of the worker.

### [Prior Art Document]

(Patent Document 1) Korean Patent Application Publication No. 2014-21084 (published on February 20, 2014)
(Patent Document 2) Korean Patent Application Publication No. 2010-74428 (published on July 02, 2010)

### Disclosure

### Technical Problem

The present invention has been made in an effort to solve the problems and an object of the present invention is to provide an excavator arm having a rotation device disposed between an upper arm and a lower arm, the excavator arm being able to change an excavation direction into a forward excavation direction and a backward excavation direction, and excavation directions at predetermined angles from the forward and backward excavation directions.

Another object of the present invention is to remarkably improve efficiency of excavation, minimize fatigue of a worker, and improve work efficiency by easily changing an excavation direction not only into a forward excavation direction and a backward excavation direction, but into excavation directions at predetermined angles from the forward and backward excavation directions even without separating and remounting a bucket.

Another object of the present invention is to further stably maintain the lower arm that has been rotated at a predetermined angle during excavating and to further stably perform excavation with the lower arm rotated at a predetermined angle by further including an anti-rotation unit including a stopper gear that selectively engages with a worm wheel of the rotation device.

Another object of the present invention is to allow a lower arm to be rotated at 360° or more in both direction, and to be rotated again at a predetermined angle without twisting of the upper hydraulic lines or the lower hydraulic lines when it is required to rotate again the lower arm after rotating it at a predetermined angle, because there is provided a rotation device that is fixed between the upper arm and the lower arm, allows the lower arm to be rotated at 360° or more, and maintains the lower arm at a predetermined angle. Accordingly, the lower arm can be selectively rotated at a minimum rotation angle in a first direction or a second direction, so the lower arm can be more efficiently rotated.

### Technical Solution

The present invention for accomplishing the objects is as follows. That is, an excavator arm having a rotation device according to the present invention is connected to a boom of an excavator to be operated by a cylinder, connected with a bucket for excavation at the lower end through a quick coupler, and connected with a bucket cylinder for operating the bucket over the arm. The arm is divided into an upper arm and a lower arm and a rotation device that selectively rotates the lower arm at predetermined angles over 360° in both directions is fixed between the upper arm and the lower arm.

The rotation device may include: an upper arm-fixing plate having a top to which a lower end of the upper arm is fixed; a fixed plate of which a top is fixed in close contact to a bottom of the upper arm-fixing plate; a fixed ring fixed to a bottom of the fixed plate with a lower end bent outward; a rotary ring rotatably fitted on the fixed ring with an upper end bent inward; a rotary plate fixed in close contact to a lower end of the rotary ring to be selectively rotated with the rotary ring; a lower arm-fixing plate fixed in close contact to a bottom of the rotary plate and fixing an upper end of the lower arm; a rotary shaft disposed through centers of the lower arm-fixing plate and the upper arm-fixing plate, with a lower end fixed to the rotary plate through a fixing plate and an upper outer side rotatably supported inside the fixed plate through a shaft bushing; a hydraulic connection cover having fixing brackets protruding outward from an outer side of the hydraulic connection cover with outer ends fixed to a lower inner side of the upper arm, having a coupling groove on a bottom, and having a hydraulic pressure supply guide line and a hydraulic pressure return guide line formed from both sides of a top to the coupling groove to be connected to upper hydraulic lines at both sides of the top; a hydraulic shaft disposed through a center of the rotary shaft, protruding a predetermined distance upward from a top of the rotary shaft having a flange protruding outward to be supported through the center of the rotary shaft by the flange, fixed such that the upper end protruding from the top of the rotary shaft can be rotated through the coupling groove of the hydraulic connection cover, having the hydraulic pressure supply guide line, a hydraulic pressure supply line that communicates with the hydraulic pressure return guide line, and a hydraulic pressure return line that are formed through two positions of an outer side, an inside, and two positions of a bottom thereof, and guiding hydraulic pressure, which is supplied and returned through the upper hydraulic lines connected to the hydraulic pressure supply guide line and the hydraulic pressure return guide line in the hydraulic connection cover, to the bucket cylinder through lower hydraulic lines connected to lower ends of the hydraulic pressure supply line and the hydraulic pressure return line; a driving unit disposed at aside on the top of the upper arm-fixing plate to transmit power for rotating the rotary shaft; an interlocking unit disposed perpendicular to the driving unit at a side on the top of the fixed plate to be operated by power from the driving unit; and an interlocking rotary unit engaged with the interlocking unit and fitted on the upper end of the rotary shaft to rotate the rotary shaft by transmitting power from the interlocking unit.

In order to guide hydraulic pressure from the hydraulic pressure supply guide line and the hydraulic pressure return guide line in the hydraulic connection cover to the hydraulic pressure supply line and the hydraulic pressure return line in the hydraulic shaft throughout a rotational direction of 360°, even through the rotary shaft is rotated by the interlocking rotary unit and the hydraulic shaft is rotated at a predetermined angle, a hydraulic pressure supply groove may be formed throughout 360° around the hydraulic shaft at a predetermined depth toward a center from an upper outer side of the hydraulic shaft at an upper end of the hydraulic pressure supply line; and a hydraulic pressure return groove may be formed throughout 360° around the hydraulic shaft at a predetermined depth toward the center from another predetermined position of the upper outer side of the hydraulic shaft at an upper end of the hydraulic pressure return line.

A sealing groove may be formed over and under the hydraulic pressure supply groove of the hydraulic shaft and sealing members may be inserted and fixed in the sealing grooves. Further, a sealing groove may be formed over and under the hydraulic pressure return groove of the hydraulic shaft and sealing members may be inserted and fixed in the sealing grooves.

The driving unit may include: a bracket fixed to a side on the top of the upper arm-fixing plate; a driving shaft rotatably disposed through the bracket; a driving motor connected with the driving shaft to operate the driving shaft; and a driving gear that is a conical gear disposed at an end of the driving shaft.

The interlocking unit may be disposed at a side on the top of the fixed plate to be operated by power from the driving unit, and may include: brackets disposed perpendicular to the driving unit and fixed at a side on the top of the fixed plate; a worm shaft rotatably supported at both ends on the brackets; a worm formed at a center of the worm shaft; an interlocking shaft extending from an end of the worm shaft and protruding a predetermined distance from the bracket; and an interlocking gear that is a conical gear disposed at an end of the interlocking shaft and is perpendicularly in mesh with the driving gear to transmit power from the driving unit to the interlocking shaft.

The interlocking rotary unit may be a worm wheel that is engaged with the interlocking unit to be rotated with the worm when the interlocking shaft is rotated.

The interlocking unit may be symmetrically fixed in pairs at both sides of the rotary shaft on the top of the fixed plate and the driving unit may also be symmetrically fixed in pairs at both sides of the rotary shaft on the top of the upper arm-fixing plate to correspond to the interlocking units.

An anti-rotation unit selectively preventing rotation of the worm wheel by selectively engaging with the worm wheel may be fixed at a side of the rotary shaft on the top of the upper arm-fixing plate in order to maintain the lower arm that has been rotated at a predetermined angle with the upper end fixed to the bottom of the lower arm-fixing plate by the rotary shaft rotating at a predetermined angle.

The anti-rotation unit may include: a bracket fixed at a side on the top of the upper arm-fixing plate; a stopper cylinder having a rod supported by the bracket to be able to horizontally reciprocate; and a stopper gear disposed at an end of the rod of the stopper cylinder to selectively engage with the worm wheel.

The lower arm may have a coupling bracket on a side of an upper portion to be linked to a lower end of the bucket cylinder so that the bucket can be operated for excavation by the bucket cylinder with the lower arm selectively rotated at a predetermined angle about the upper arm by the rotation device.

### Advantageous Effects

Effects of the excavator arm having a rotation device according to the present invention are as follows.

First, since there is provided a rotation device fixed between an upper arm and a lower arm, it is possible to easily change an excavation direction not only into a forward excavation direction and a backward excavation direction, but into excavation directions at predetermined angles from the forward and backward excavation directions even without separating and remounting a bucket.

Second, since it is possible to easily change an excavation direction not only into a forward excavation direction and a backward excavation direction, but into excavation directions at predetermined angles from the forward and backward excavation directions even without separating and remounting the bucket, it is possible to remarkably improve efficiency of excavation, minimize fatigue of a worker, and improve work efficiency.

Third, it is possible to further stably maintain the lower arm that has been rotated at a predetermined angle during excavating and to further stably perform excavation with the lower arm rotated at a predetermined angle by further including an anti-rotation unit including a stopper gear that selectively engages with a worm wheel of the rotation device.

Fourth, since there is provided the rotation unit that is fixed between the upper arm and the lower arm, allows the lower arm to rotate at 360° or more, and maintains the lower arm at a predetermined angle, the lower arm can be rotated at 360° or more both directions, and when it is required to rotate again the lower arm after rotating it at a predetermined angle, the lower arm can be rotated again at a predetermined angle without twisting of the upper hydraulic lines or the lower hydraulic lines. Accordingly, the lower arm can be selectively rotated at a minimum rotation angle in a first direction or a second direction, so the lower arm can be more efficiently rotated.

### Description of Drawings

FIG. 1 is a front view showing an excavator arm having a rotation device according to the present invention.
FIG. 2 is a perspective view showing a rotation device that is an important part of an excavator arm having a rotation device according to the present invention.
FIG. 3 is a cross-sectional view showing the rotation device that is an important part of an excavator arm having a rotation device according to the present invention.
FIG. 4 is a plan view showing the rotation device that is an important part of an excavator arm having a rotation device according to the present invention.
FIGS. 5 and 6 are views sequentially showing selective rotation of a lower arm of the excavator arm having a rotation device according to the present invention.
FIG. 7 is a plan view showing another embodiment of the rotation device that is an important part of an excavator arm having a rotation device according to the present invention.
FIG. 8 is a plan view showing another embodiment of the rotation device that is an important part of an excavator arm having a rotation device according to the present invention.

**[Description of Reference Numerals]**

| | |
|---|---|
| 100: Boom | |
| 200: Arm cylinder | |
| 300: Arm | |
| 310: Upper arm | 320: Lower arm |
| 500: Rotation device | |
| 510: Upper arm-fixing plate | 511: Fixed plate |
| 515: Fixed ring | 520: Lower arm-fixing plate |
| 521: Rotary plate | 525: Rotary ring |
| 529: Fixing plate | 530: Rotary shaft |
| 535: Shaft bushing | 540: Hydraulic shaft |
| 541: Flange | |
| 542: Hydraulic pressure supply line | |
| 542a: Hydraulic pressure supply groove | |
| 543: Sealing groove | |
| 543a: Sealing member | |
| 544: Hydraulic pressure return line | |
| 544a: Hydraulic pressure return groove | |
| 545: Sealing groove | |
| 545a: Sealing member | |
| 590: Hydraulic connection cover | |
| 592: Hydraulic pressure supply guide line | |
| 594: Hydraulic pressure return guide line | |
| 551: Worm | 552: Worm shaft |
| 553: Interlocking shaft | 554: Interlocking gear |
| 555: Bracket | 561: Worm wheel |
| 570: Driving motor | 571: Driving shaft |
| 573: Driving gear | 575: Bracket |
| 580: Anti-rotation unit | 581: Stopper cylinder |
| 583: Rod | 585: Stopper gear |
| 587: Bracket | |
| 601: Upper hydraulic line | 605: Lower hydraulic line |
| 700: Bucket | 750: Bucket cylinder |

### Best Mode

Hereinafter, preferred embodiments of an excavator arm having a rotation device according to the present invention will be described with reference to accompanying drawings.

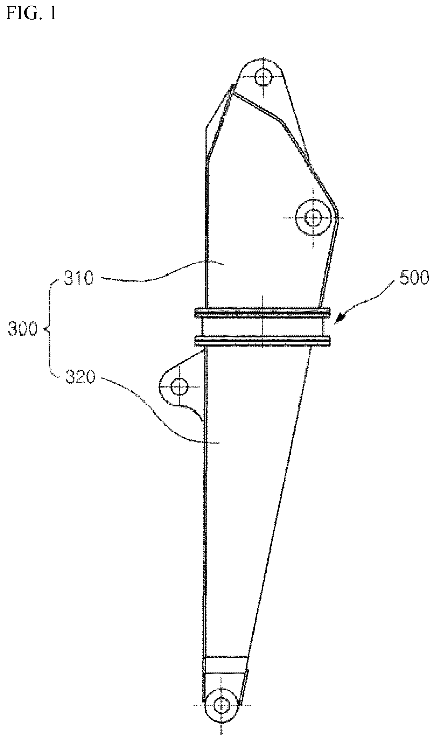

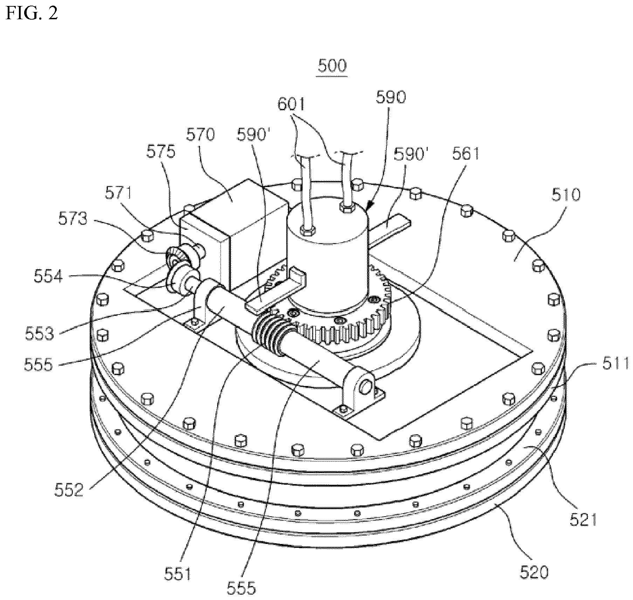

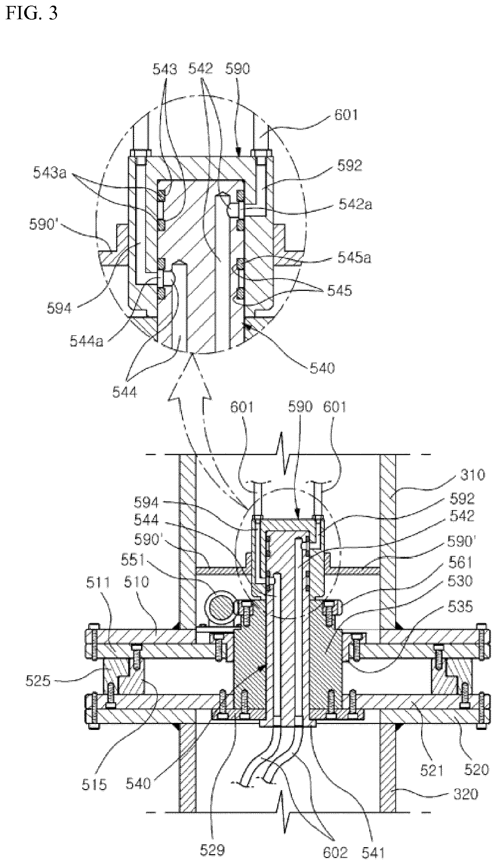

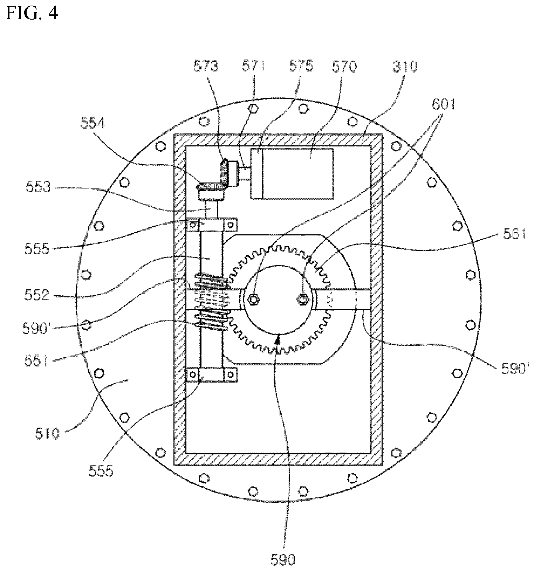

FIG. 1 is a front view showing an excavator arm having a rotation device according to the present invention, FIG. 2 is a perspective view showing a rotation device that is an important part of an excavator arm having a rotation device according to the present invention, FIG. 3 is a cross-sectional view showing the rotation device that is an important part of an excavator arm having a rotation device according to the present invention, and FIG. 4 is a plan view showing the rotation device that is an important part of an excavator arm having a rotation device according to the present invention.

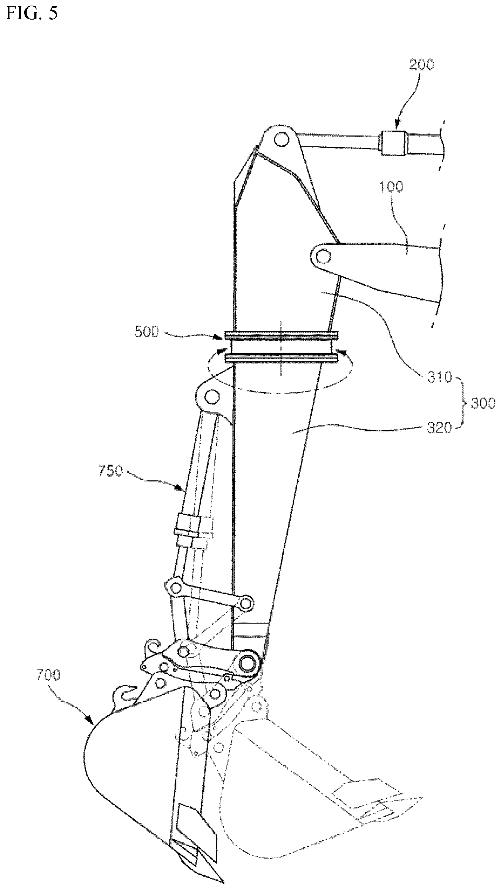

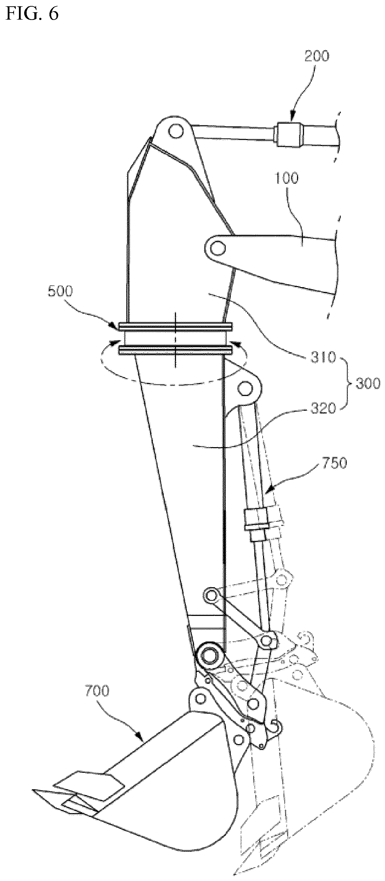

FIGS. 5 and 6 are views sequentially showing selective rotation of a lower arm of the excavator arm having a rotation device according to the present invention.

As shown in FIGS. 1 to 6, an excavator arm 300 having a rotation device according to an embodiment of the present invention is connected to a boom 100 of an excavator to be operated by a cylinder 200, connected with a bucket 700 for excavation at the lower end through a quick coupler (not indicated by reference numeral), and connected with a bucket cylinder 750 for operating the bucket 700 over the arm 300. The arm 300 is divided into an upper arm 310 and a lower arm 320 and a rotation device 500 that selectively rotates the lower arm 320 at predetermined angles over 360° in both directions is fixed between the upper arm 310 and the lower arm 320.

In the excavator arm 300 having a rotation device according to the present invention, the lower arm 320 may have a coupling bracket (not indicated by reference numeral) on a side of the upper portion to be linked to the lower end of the bucket cylinder 750 so that the bucket 700 can be operated for excavation by the bucket cylinder 750 with the lower arm 320 selectively rotated at a predetermined angle about the upper arm 310 by the rotation device 500.

In the excavator arm having a rotation device according to the present invention, particularly, the rotation device 500 includes an upper arm-fixing plate 510, a fixed plate 511, a fixed ring 515, a rotary ring 525, rotary plate 521, a lower arm-fixing plate 520, a rotary shaft 530, a hydraulic connection cover 590, a hydraulic shaft 540, a driving unit, an interlocking unit, and an interlocking rotary unit.

In detail, the lower end of the upper arm 310 is fixed to the top of the upper arm-fixing plate 510, and in this case, the lower end of the upper arm 310 may be fixed to the upper arm-fixing plate 510 by welding.

The fixed plate 511 is fixed to the upper arm-fixing plate 510 with the top in close contact with the bottom of the upper arm-fixing plate and the upper end of the lower arm 320 may be fixed to the upper arm-fixing plate 520 by welding.

Further, the fixed ring 515 is fixed to the bottom of the fixed plate 511 with the lower end bent outward and the rotary ring 525 is rotatably fitted on the fixed ring 515 with the upper end bent inward.

The rotary plate 521 is fixed in close contact to the lower end of the rotary ring 525 to be selectively rotated with the rotary ring 535 and the lower arm-fixing plate 520 is fixed in close contact to the bottom of the rotary plate 521 with the upper end of the lower arm 320 fixed thereto.

Further, the rotary shaft 530 is disposed through the centers of the lower arm-fixing plate 520 and the upper arm-fixing plate 510, with the lower end fixed to the rotary plate 521 through a fixing plate 529 and the upper outer side rotatably supported inside the fixed plate 511 through a shaft bushing 535.

Meanwhile, the hydraulic connection cover 590 has fixing brackets 590' protruding outward from the outer side of the hydraulic connection cover with the outer ends fixed to the lower inner side of the upper arm 310, has a coupling groove 591 on the bottom, and has a hydraulic pressure supply guide line 592 and a hydraulic pressure return guide line 594 formed from both sides of the top to the coupling groove 591 to be connected to upper hydraulic lines 601 at both sides of the top.

The hydraulic shaft 540 is disposed through the center of the rotary shaft 530, protrudes a predetermined distance upward from the top of the rotary shaft 530, and has a flange 541 protruding outward, so it is supported through the center of the rotary shaft 530 by the flange 541.

The hydraulic shaft 540 fixed such that the upper end protruding from the top of the rotary shaft 530 can be rotated through the coupling groove 591 of the hydraulic connection cover 590, and the hydraulic pressure supply guide line 592, a hydraulic pressure supply line 542 that communicates with the hydraulic pressure return guide line 594, and a hydraulic pressure return line 544 are formed through two positions of the outer side, the inside, and two positions of the bottom.

The hydraulic shaft 540 guides the hydraulic pressure, which is supplied and returned through the upper hydraulic lines 601 connected to the hydraulic pressure supply guide line 592 and the hydraulic pressure return guide line 594 in the hydraulic connection cover 590, to the bucket cylinder 750 through lower hydraulic lines 605 connected to the lower ends of the hydraulic pressure supply line 542 and the hydraulic pressure return line 544.

The driving unit is disposed at a side on the top of the upper arm-fixing plate 510 to supply power for rotating the rotary shaft 530.

The driving unit may include a bracket 575 fixed to a side on the top of the upper arm-fixing plate 510, a driving shaft 571 rotatably disposed through the bracket 575, a driving motor 570 connected with the driving shaft 571 to operate the driving shaft 571, and a driving gear 573 that is a conical gear disposed at an end of the driving shaft 571.

The interlocking unit is disposed perpendicular to the driving unit at a side on the top of the fixed plate 511 to be operated by power from the driving unit.

The interlocking unit is disposed at a side on the top of the fixed plate 511 to be operated by the power from the driving unit and includes brackets 555, a worm shaft 552, a worm 551, an interlocking shaft 553, and an interlocking gear 554.

The brackets 555 may be disposed perpendicular to the driving unit and fixed at a side on the top of the fixed plate 511.

Further, the worm shaft 552 is rotatably supported at both ends on the brackets 555 and the worm 551 is formed at the center of the worm shaft 552.

The interlocking shaft 553 extends from an end of the worm shaft 551 and protrudes a predetermined distance from a bracket 555 and the interlocking gear 554 is a conical gear disposed at an end of the interlocking shaft 553 and is perpendicularly in mesh with the driving gear 573 to transmit the power from the driving unit to the interlocking shaft 553.

The interlocking rotary unit is engaged with the interlocking unit and is fitted on the upper end of the rotary shaft 530 to rotate the rotary shaft 530 by transmitting the power from the interlocking unit.

The interlocking rotary unit may be a worm wheel 561 that is engaged with the interlocking unit to be rotated with the worm 551 when the interlocking shaft 553 is rotated.

That is, when the worm wheel 561 is rotated in mesh with the worm 551, the rotary shaft 530 is rotated, and accordingly, the rotary plate 521 fixed to the lower end of the rotary shaft 530 by the fixing plate 529 can be rotated.

In other words, as the rotary plate 521 is rotated, the lower arm-fixing plate 520 fixed in close contact to the bottom of the rotary plate 521 is rotated, and the lower arm 320 of which the upper end is fixed to the bottom of the lower arm-fixing plate 520 is rotated.

In the excavator arm 300 having a rotation device according to the present invention, it is important to guide hydraulic pressure from the hydraulic pressure supply guide line 592 and the hydraulic pressure return guide line 594 in the hydraulic connection cover 590 to the hydraulic pressure supply line 542 and the hydraulic pressure return line 544 in the hydraulic shaft 540 throughout the rotational direction of 360° or more in both directions, even through the rotary shaft is rotated by the interlocking rotary unit and the hydraulic shaft 540 is rotated at a predetermined angle.

Accordingly, a hydraulic pressure supply groove 542a is formed throughout 360° around the hydraulic shaft 540 at a predetermined depth toward the center from a predetermined position of the upper outer side of the hydraulic shaft 540 at the upper end of the hydraulic pressure supply line 542.

A sealing groove 543 may be formed over and under the hydraulic pressure supply groove 542a of the hydraulic shaft 540 and sealing members 543a may be inserted and fixed in the sealing grooves 543.

Accordingly, a hydraulic pressure return groove 544a is formed throughout 360° around the hydraulic shaft 540 at a predetermined depth toward the center from another predetermined position of the upper outer side of the hydraulic shaft 540 at the upper end of the hydraulic pressure return line 544.

A sealing groove 545 may be formed over and under the hydraulic pressure return groove 544a of the hydraulic shaft 540 and sealing members 545a may be inserted and fixed in the sealing grooves 545.

Use of the excavator arm having a rotation device according to the present invention is described with reference to FIGS. 1 to 4, for rotation angle of 180° of the bucket 700 that is rotated by the lower arm 320, as shown in FIGS. 5 and 6.

### Mode for Invention

Use of the excavator arm having a rotation device according to the present invention is described hereafter. First, when it is required to rotate the bucket 700 at a predetermined angle, a work in the cab operates the driving motor 570 so that the worm 551 is rotated by power transmitted through the interlocking unit.

When the worm 551 is rotated, the worm wheel 561 engaged with the worm 551 is rotated, and the rotary shaft 530, the rotary plate 521, and the lower arm-fixing plate 520 are correspondingly rotated. Accordingly, the lower arm 320 of which the upper end is fixed to the bottom of the lower arm-fixing plate 520 is rotated.

When the rotary shaft 530 is rotated, the hydraulic shaft 540 is rotated with the rotary shaft 530, but the upper end of the hydraulic shaft 540 is fixed to the coupling groove 591 of the hydraulic connection cover 590.

After the lower arm 320 is rotated at a predetermined angle through this process, the worker stops the driving motor 570 and then he/she can start excavating.

Since the worm wheel 561 and the worm 551 are in mesh with each other, once the lower arm 320 is rotated at a predetermined angle, excavation can be stably performed with the lower arm 320 rotated at the angle.

The use of the excavator arm having a rotation device according to the present invention is described for the rotation angle of 180° that is rotated by the lower arm 320, but the bucket 700 that is rotated by the lower arm 320 can be rotated at 360° in a predetermined direction and a worker can variously change the angle in the cab into 30°, 45°, 60°, 90°, 120°, 150°, 180°, 210°, 240°, 270°, 310°, 330°, etc.

Obviously, the rotation angle of the bucket 700 that is rotated by the lower arm 320 can be changed in the same way in the other direction.

In other words, in order to variously change the rotation angle of the bucket 700 that is rotated by the lower arm 320 in first and second directions, the driving motor 570 may be a forward-reverse motor that is selectively rotated forward and backward, so a worker can variously change the rotation angle of the bucket 700 by rotating the lower arm 320 through the motor in the cab.

Further, in the excavator arm having a rotation device according to the present invention, first ends of the lower hydraulic lines 602 may be connected to the hydraulic shaft 540 and second ends may be connected to the bucket cylinder 750 through the lower arm 320.

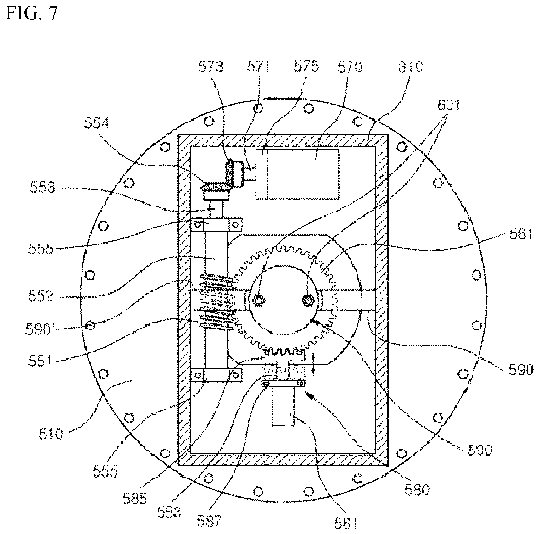

FIG. 7 is a plan view showing another embodiment of the rotation device that is an important part of an excavator arm having a rotation device according to the present invention.

As shown in FIG. 7, this embodiment is different from the embodiment described with reference to FIGS. 1 to 6 only in that there is further provided an anti-rotation unit 580, so the same components are not described herein.

Referring to FIG. 7 with FIGS. 1 to 6, in this embodiment of the rotation device that is an important part of an excavator arm having a rotation device according to the present invention, an anti-rotation unit 580 that selectively prevents rotation of the worm wheel 561 at a side of the rotary shaft 530 on the top of the upper arm-fixing plate 510 by selectively engaging with the worm wheel 561 so that the lower arm 320 of which the upper end is fixed to the bottom of the lower arm-fixing plate 520 is maintained at a predetermined angle after rotated at the angle by the rotary shaft 530.

The anti-rotation unit 580 may include a bracket 587 fixed at a side on the top of the upper arm-fixing plate 510, a stopper cylinder 581 having a rod 583 supported by the bracket 587 to be able to horizontally reciprocate, and a stopper gear 585 disposed at an end of the rod 583 of the stopper cylinder 581 to selectively engage with the worm wheel 561.

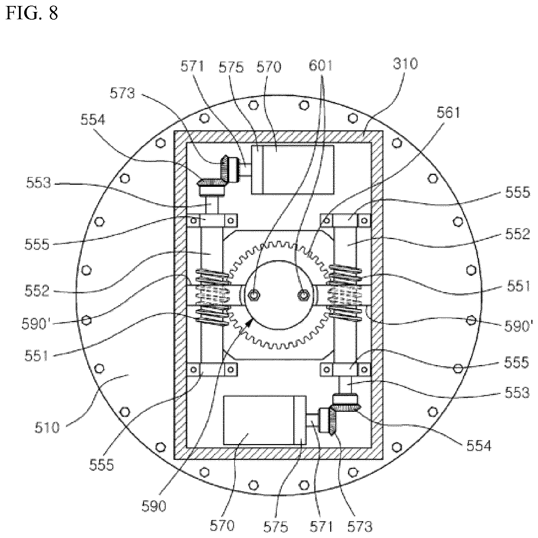

FIG. 8 is a plan view showing another embodiment of the rotation device that is an important part of an excavator arm having a rotation device according to the present invention.

As shown in FIG. 8, this embodiment is different from the embodiment described with reference to FIGS. 1 to 6 only in that there is provided pairs of driving units and interlocking rotary units, so the same components are not described herein.

Referring to FIG. 8 with FIGS. 1 to 6, pairs of driving units and interlocking rotary units may be provided in this embodiment of the rotation device that is an important part of an excavator arm having a rotation device according to the present invention.

In other words, the interlocking units may be symmetrically fixed in pairs at both sides of the rotary shaft 530 on the top of the fixed plate 511 and the driving units may also be symmetrically fixed in pairs at both sides of the rotary shaft 530 on the top of the upper arm-fixing plate 510 to correspond to the interlocking units.

Since the driving units and the interlocking rotary units are provided each in pairs, the lower arm can be more stably rotated. Further, when the worm wheel 561 that is being rotated is stopped, the worms 551 restrict the worm wheel 561 in pairs by engaging with the worm wheel 561. Accordingly, the bucket 700 can be stably fixed without moving, for example, rotating with respect to the lower arm 320 that is rotated by the worm wheel 561 when excavating after rotated.

According to the embodiments of an excavator arm having a rotation device according to the present invention, since the rotation device 500 is disposed and fixed between the upper arm 310 and the lower arm 320, it is possible to easily change an excavation direction not only into a forward excavation direction and a backward excavation direction, but into excavation directions at predetermined angles from the forward and backward excavation directions even without separating and remounting the bucket 700.

Further, since it is possible to easily change an excavation direction not only into a forward excavation direction and a backward excavation direction, but into excavation directions at predetermined angles from the forward and backward excavation directions even without separating and remounting the bucket 700, it is possible to remarkably improve efficiency of excavation, minimize fatigue of a worker, and improve work efficiency.

Further, since there is further provided the anti-rotation unit 580 including the stopper gear 585 that selectively engages with the worm wheel 561 of the rotation device 500, it is possible to further stably maintain the lower arm 320 that has been rotated at a predetermined angle during excavating, so it is possible to further stably perform excavation with the lower arm 320 rotated at a predetermined angle.

Further, since there is provided the rotation device 500 that is fixed between the upper arm 310 and the lower arm 320, allows the lower arm 320 to rotate at 360° or more, and maintains the lower arm at a predetermined angle, the lower arm can be rotated at 360° or more both direction, and when it is required to rotate again the lower arm after rotating it at a predetermined angle, the lower arm can be rotated again at a predetermined angle without twisting of the upper hydraulic lines 601 or the lower hydraulic lines 605. Accordingly, the lower arm 320 can be selectively rotated at a minimum rotation angle in a first direction or a second direction, so the lower arm 320 can be more efficiently rotated.

Although embodiments of the present invention were described above, the present invention is not limited thereto, the present invention may be modified in various ways by those skilled in the art, and the modifications are included in the scope of the present invention.

## Claims

1. An excavator arm (300) having a rotation device, the excavator arm being connected to a boom (100) of an excavator to be operated by a cylinder (200), connected with a bucket (700) for excavation at a lower end through a quick coupler, and connected with a bucket cylinder (750) for operating the bucket (700) over the arm (300),wherein the arm (300) is divided into an upper arm (310) and a lower arm (320) and a rotation device (500) that selectively rotates the lower arm (320) at predetermined angles over 360° in both directions is fixed between the upper arm (310) and the lower arm (320).

2. The excavator arm of claim 1, wherein the rotation device includes:
an upper arm-fixing plate (510) having a top to which a lower end of the upper arm (310) is fixed;
a fixed plate (511) of which a top is fixed in close contact to a bottom of the upper arm-fixing plate (510);
a fixed ring (515) fixed to a bottom of the fixed plate (511) with a lower end bent outward;
a rotary ring (525) rotatably fitted on the fixed ring (515) with an upper end bent inward;
a rotary plate (521) fixed in close contact to a lower end of the rotary ring (525) to be selectively rotated with the rotary ring (525);
a lower arm-fixing plate (520) fixed in close contact to a bottom of the rotary plate (521) and fixing an upper end of the lower arm (320);
a rotary shaft (530) disposed through centers of the lower arm-fixing plate (520) and the upper arm-fixing plate (510), with a lower end fixed to the rotary plate (521) through a fixing plate (529) and an upper outer side rotatably supported inside the fixed plate (511) through a shaft bushing (535);
a hydraulic connection cover (590) having fixing brackets (590') protruding outward from an outer side of the hydraulic connection cover with outer ends fixed to a lower inner side of the upper arm (310), having a coupling groove (591) on a bottom, and having a hydraulic pressure supply guide line (592) and a hydraulic pressure return guide line (594) formed from both sides of a top to the coupling groove (591) to be connected to upper hydraulic lines (601) at both sides of the top;
a hydraulic shaft (540) disposed through a center of the rotary shaft (530), protruding a predetermined distance upward from a top of the rotary shaft (530) having a flange (541) protruding outward to be supported through the center of the rotary shaft (530) by the flange (541), fixed such that the upper end protruding from the top of the rotary shaft (530) can be rotated through the coupling groove (591) of the hydraulic connection cover (590), having the hydraulic pressure supply guide line (592), a hydraulic pressure supply line (542) that communicates with the hydraulic pressure return guide line (594), and a hydraulic pressure return line (544) that are formed through two positions of an outer side, an inside, and two positions of a bottom thereof, and guiding hydraulic pressure, which is supplied and returned through the upper hydraulic lines (601) connected to the hydraulic pressure supply guide line (592) and the hydraulic pressure return guide line (594) in the hydraulic connection cover (590), to the bucket cylinder (750) through lower hydraulic lines (605) connected to lower ends of the hydraulic pressure supply line (542) and the hydraulic pressure return line (544);
a driving unit disposed at aside on the top of the upper arm-fixing plate (510) to transmit power for rotating the rotary shaft (530);
an interlocking unit disposed perpendicular to the driving unit at a side on the top of the fixed plate (511) to be operated by power from the driving unit; and
an interlocking rotary unit engaged with the interlocking unit and fitted on the upper end of the rotary shaft (530) to rotate the rotary shaft (530) by transmitting power from the interlocking unit.

3. The excavator arm of claim 2,
wherein, in order to guide hydraulic pressure from the hydraulic pressure supply guide line (592) and the hydraulic pressure return guide line (594) in the hydraulic connection cover (590) to the hydraulic pressure supply line (542) and the hydraulic pressure return line (544) in the hydraulic shaft (540) throughout a rotational direction of 360°, even through the rotary shaft is rotated by the interlocking rotary unit and the hydraulic shaft (540) is rotated at a predetermined angle,
a hydraulic pressure supply groove (542a) is formed throughout 360° around the hydraulic shaft (540) at a predetermined depth toward a center from an upper outer side of the hydraulic shaft (540) at an upper end of the hydraulic pressure supply line (542), and
a hydraulic pressure return groove (544a) is formed throughout 360° around the hydraulic shaft (540) at a predetermined depth toward the center from another predetermined position of the upper outer side of the hydraulic shaft (540) at an upper end of the hydraulic pressure return line (544).

4. The excavator arm of claim 3,
wherein a sealing groove (543) is formed over and under the hydraulic pressure supply groove (542a) of the hydraulic shaft (540) and sealing members (543a) are inserted and fixed in the sealing grooves (543), and
wherein a sealing groove (545) is formed over and under the hydraulic pressure return groove (544a) of the hydraulic shaft (540) and sealing members (545a) are inserted and fixed in the sealing grooves (545).

5. The excavator arm of claim 2, wherein the driving unit includes:
a bracket (575) fixed to a side on the top of the upper arm-fixing plate (510);
a driving shaft (571) rotatably disposed through the bracket (575);
a driving motor (570) connected with the driving shaft (571) to operate the driving shaft (571); and
a driving gear (573) that is a conical gear disposed at an end of the driving shaft (571).

6. The excavator arm of claim 5, wherein the interlocking unit is disposed at a side on the top of the fixed plate (511) to be operated by power from the driving unit, and includes:
brackets (555) disposed perpendicular to the driving unit and fixed at a side on the top of the fixed plate (511) ;
a worm shaft (552) rotatably supported at both ends on the brackets (555);
a worm (551) formed at a center of the worm shaft (552);
an interlocking shaft (553) extending from an end of the worm shaft (552) and protruding a predetermined distance from the bracket (555); and
an interlocking gear (554) that is a conical gear disposed at an end of the interlocking shaft (553) and is perpendicularly in mesh with the driving gear (573) to transmit power from the driving unit to the interlocking shaft (553).

7. The excavator arm of claim 6, wherein the interlocking rotary unit is a worm wheel (561) that is engaged with the interlocking unit to be rotated with the worm (551) when the interlocking shaft (553) is rotated.

8. The excavator arm of claim 6 or 7, wherein the interlocking unit is symmetrically fixed in pairs at both sides of the rotary shaft (530) on the top of the fixed plate (511) and the driving unit is also symmetrically fixed in pairs at both sides of the rotary shaft (530) on the top of the upper arm-fixing plate (510) to correspond to the interlocking units.

9. The excavator arm of claim 7, wherein an anti-rotation unit (580) selectively preventing rotation of the worm wheel (561) by selectively engaging with the worm wheel (561) is fixed at a side of the rotary shaft (530) on the top of the upper arm-fixing plate (510) in order to maintain the lower arm (320) that has been rotated at a predetermined angle with the upper end fixed to the bottom of the lower arm-fixing plate (520) by the rotary shaft (530) rotating at a predetermined angle.

10. The excavator arm of claim 9, wherein the anti-rotation unit (580) includes:
a bracket (587) fixed at a side on the top of the upper arm-fixing plate (510);
a stopper cylinder (581) having a rod (583) supported by the bracket (587) to be able to horizontally reciprocate; and
a stopper gear (585) disposed at an end of the rod (583) of the stopper cylinder (581) to selectively engage with the worm wheel (561).

11. The excavator arm of claim 1, wherein the lower arm (320) has a coupling bracket on a side of an upper portion to be linked to a lower end of the bucket cylinder (750) so that the bucket (700) can be operated for excavation by the bucket cylinder (750) with the lower arm (320) selectively rotated at a predetermined angle about the upper arm (310) by the rotation device (500).
